# EUROPEAN PATENT APPLICATION

(11) **EP 4 553 955 A1**
(43) Date of publication of application: **14.05.2025**
(21) Application number: 24211073.2
(22) Date of filing: 06.11.2024
(51) Int. Cl.: H01M 10/613, H01M 10/625, H01M 10/6555, H01M 10/6557, H01M 10/658

(54) **THERMAL MANAGEMENT OF A BATTERY CELL ARRAY**

(30) Priority: 08.11.2023 GB 202317117
(71) Applicant: Rolls-Royce plc, London N1 9FX (GB)
(72) Inventor: Örökös-Tóth, István, Derby, DE24 8BJ (GB); Lorincz, Daniel, Derby, DE24 8BJ (GB); Hasznosi, Kolos, Derby, DE24 8BJ (GB); Lukacs, Andras, Derby, DE24 8BJ (GB)
(74) Representative: Rolls-Royce plc

(57) **Abstract**

The disclosure relates to thermal management of a battery cell array in a battery module for high power applications. In example embodiments, a battery module comprises: a plurality of battery cells (101₁₋ₙ) arranged in an array (102); a cooling system (104) comprising a plurality of heat exchanger plates (105₁₋₃) interleaved between rows (103₁₋₆) of the battery cell array (102); and a plurality of thermal barrier walls (110₁₋₃) interleaved between rows (103₁₋₆) of the battery cell array (102).

## Description

### TECHNICAL FIELD

The disclosure relates to thermal management of a battery cell array in a battery module for high power applications.

### BACKGROUND

Thermal management and mitigation of thermal runaway are necessary requirements for battery modules that may be used in high power applications, particularly for safety critical applications such as in aerospace. When many battery cells are assembled into a closely packed array of cells in a battery module, thermal runaway of a single cell, which may occur for example due to a defect causing a short circuit, can propagate to other cells in the module and lead to failure of the entire module.

In the event of, for example, a lithium-ion battery thermal runaway, the battery cell releases hot gases, which can affect neighbouring cells and result in cascading failure of the battery module, battery pack or entire system. Containment and/or controlled release of hot gases is therefore important to ensure safety of a battery system. Under certain conditions involving high rates of reaction, a battery thermal runaway can result in explosion, where combustible elements provide a sudden release of energy.

Gas venting during thermal runaway causes the internal pressure of a battery module enclosure to increase. This can be rapid or gradual, depending on a number of factors including temperature, the number of failing cells, the stage of thermal runaway, the particular chemistry of the cells, ignition of gases, and any generation of hydrogen (or other flammable gases) from side reactions, which may cause an explosive internal atmosphere.

Containment devices for conventional high voltage (HV) battery modules tend to be designed around the principle of having a strong, rigid battery enclosure that can act as a pressure vessel capable of withstanding high temperatures and, if required, a controlled release of pressure to prevent an explosion.

An aim of battery enclosure containment is to reduce the impact of thermal runaway by providing for containment and controlled release of hot gases, which reduces temperature and pressure levels inside the enclosure. This helps to reduce the possibility of explosion or rupture of the enclosure, which can lead to other battery modules becoming affected. Lowering temperatures inside a HV battery module can also reduce the rate of propagation to other cells within the module or may avoid other cells becoming affected.

Some current thermal runaway protection devices for HV battery modules may incorporate pressure rupture discs or pressure release valves, which can be activated when a differential in pressure between the interior of a battery enclosure and an external environment exceeds a threshold. One or more such devices may be incorporated in each battery enclosure depending on the battery vent management concept used.

A problem with current enclosures is that, to contain the effects of thermal runaway, the enclosures tend to be constructed as strong rigid boxes that can withstand the pressures and temperatures resulting from thermal runaway occurring in one or more cells within the enclosure. This tends to make such enclosures heavy, reducing the overall power to weight ratio of the battery module. While such a reduced power to weight ratio can be acceptable for ground vehicles, the effect is far less acceptable for aircraft applications.

A further problem with current enclosures is that rapid propagation of thermal runaway failures in battery cells is possible, which can lead to failure of an entire battery module.

### SUMMARY

According to a first aspect there is provided a battery module comprising:
a plurality of battery cells arranged in an array;
a cooling system having a heat exchanger comprising a plurality of heat exchanger plates interleaved between rows of the battery cell array; and
a plurality of thermal barrier walls interleaved between rows of the battery cell array.

The use of a cooling system with interleaved heat exchanger plates in combination with thermal barrier walls allows for thermal runaway propagation in the battery cell array to be mitigated because excess heat is channelled away between the rows of the array and heat transfer between rows to be slowed with the thermal barrier walls. This enables the cooling system to reject heat from a relatively small number of thermal runaways and prevent or slow down further thermal propagation, leading to a safer and more robust battery module.

The heat exchanger plates may be interleaved between alternate pairs of rows of the battery cell array.

The heat exchanger plates may be corrugated. This can apply in particular to arrays where the battery cells have a circular cylindrical sectional shape, as this allows for a greater degree of thermal contact between each cell and an adjacent heat exchanger plate. Corrugating the heat exchanger plates also allows the battery cells to be more closely packed together.

The thermal barrier walls may be interleaved between alternate pairs of rows of the battery cell array.

The thermal barrier walls may be corrugated, thereby allowing the battery cells to be more closely packed together. This can apply in particular to arrays where the battery cells have a circular cylindrical sectional shape.

In some examples, the thermal barrier walls are interleaved between different alternate pairs of rows to the heat exchanger plates.

In some examples, each of the heat exchanger plates is mounted to a corresponding one of the thermal barrier walls.

In some examples, the battery cells are circular cylindrical cells.

In some examples, the battery cells are prismatic cells.

In some examples, the battery cells are pouch cells.

The battery cells may be lithium ion or lithium polymer battery cells. Other battery chemistries may also be used.

The design of the battery module aims at minimizing thermal runaway propagation failure of battery cells while incorporating a cooling option interlaced with a protection measure, leading to an efficient and optimal design. The design can be implemented in various energy storage systems in which a risk of thermal runaway or rupture is present. Applications may include automotive, marine, aeronautic, and stationary energy storage applications, in which a plurality of such battery modules are incorporated into a battery pack.

The design aims in particular at containing propagation of side wall rupture of a cluster of cells, in which the thermal barriers slow or prevent propagation to other cells in the array and the heat exchanger plates transfer heat away from the affected cells between rows of the array.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:
**Figure 1** is a schematic sectional diagram of an example arrangement of cylindrical battery cells with an interleaved heat exchanger and protective walls;
**Figure 2** is a schematic sectional diagram of an alternative arrangement of cylindrical battery cells with an interleaved heat exchanger and protective walls;
**Figure 3** is a schematic sectional diagram of an arrangement of prismatic battery cells with an interleaved heat exchanger and protective walls;
**Figure 4** is a schematic sectional diagram of an arrangement of pouch battery cells with an interleaved heat exchanger and protective walls;
**Figure 5** is a schematic sectional diagram of an arrangement of cylindrical battery cells with an interleaved heat exchanger mounted on protective walls; and
**Figure 6** is a schematic diagram of an example battery module for containing an array of battery cells.

### DETAILED DESCRIPTION

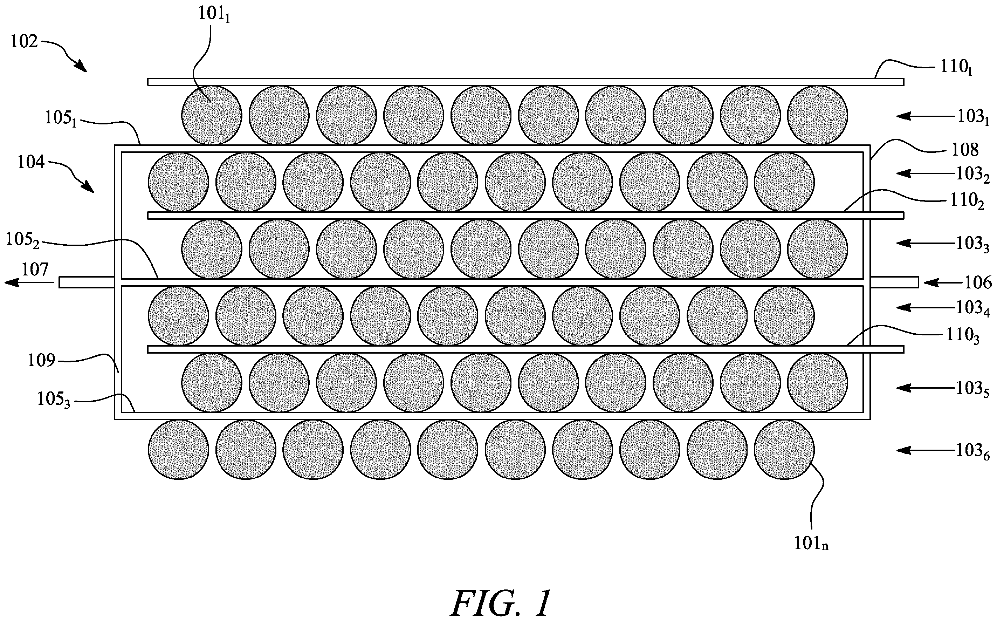

Figure 1 illustrates an example battery cell array 102 for a battery module. The array 102 comprises a plurality of battery cells 101₁₋ₙ. The battery cells 101 ₁₋ₙ are arranged in a plurality of rows 103₁₋₆. The illustration shows by example six rows of cells, with each row comprising ten cells. In this example, the cells 101 ₁₋ₙ are of circular cylindrical form.

A cooling system 104 provides cooling to the rows of cells 101₁₋ₙ. The cooling system 104 comprises a plurality of heat exchanger plates 105₁₋₃, which are interleaved between rows of the array 102. In the example shown in Figure 1, the heat exchanger plates 105₁₋₃ are interleaved between alternate pairs of rows of the array 102, i.e. between rows 103₁ and 103₂, between rows 103s and 103₄, and between rows 103s and 103s. Each of the cells 101₁₋ₙ in the array 102 is thereby thermally connected to one of the heat exchanger plates 105₁₋₃ on one side.

The heat exchanger plates 105₁₋₃ may be hollow with internal passages for transport of coolant fluid. The heat exchanger plates 105₁₋₃ may alternatively be solid metal plates for radiative cooling or may comprise heatpipes for cooling by liquid-vapour phase transport. The heat exchanger plates 105₁₋₃ may be composed of metal with an outer electrical insulator layer. In some cases the heat exchanger plates 105₁₋₃ may be plastic, such that no electrical insulation is necessary, but such materials are generally less suitable for high pressure (e.g. >2 bar) and high temperature applications. The heat exchanger plates 105₁₋₃ may be composed of a combination of metal and plastic materials.

In a fluid cooling embodiment, a cooling fluid passes through the heat exchanger plates 105₁₋₃, entering at a first end of the heat exchanger plates 105₁₋₃ via an inlet 106 and inlet manifold 108 and exiting at an opposing end of the heat exchanger plates 105₁₋₃ via an outlet manifold 109 and outlet 107. The cooling fluid may then be recirculated after heat has been extracted.

A plurality of thermal barrier walls 110₁₋₃ are interleaved between rows 103₁₋₆ of the array 102. In the example shown in Figure 1, the thermal barrier walls 110₁₋₃ are interleaved between adjacent rows of the array, i.e. between rows 103₂ and 103s, and between rows 103₄ and 103s. The thermal barrier walls 110₁₋₃ are in this example interleaved between different alternate pairs of rows to the heat exchanger plates 105₁₋₃. The thermal barrier walls 110₁₋₃ may be composed of various types of thermally insulating materials such as Superwool glass fibre or mica sheets.

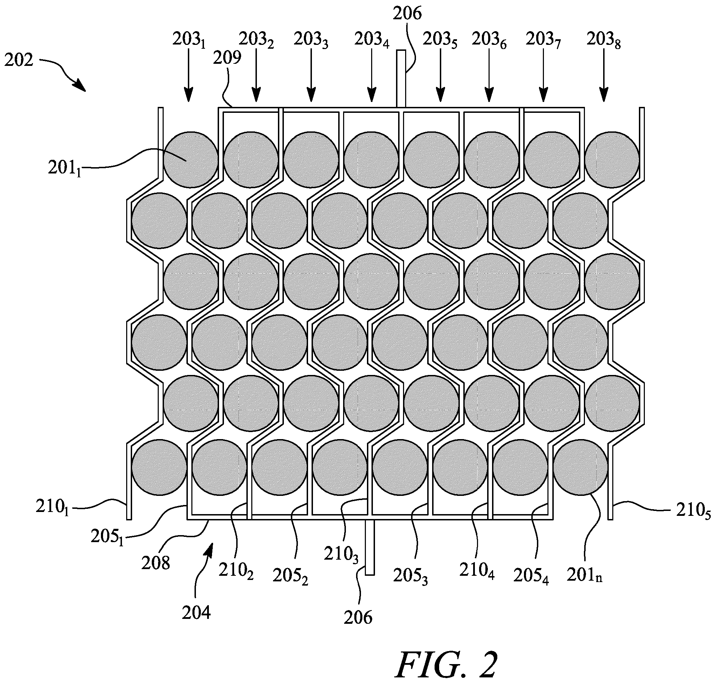

Figure 2 illustrates an alternative battery cell array 202 comprising a plurality of battery cells 201₁₋ₙ. The battery cells 201₁₋ₙ are arranged in a plurality of rows 203₁₋₈. The illustration shows in this case eight rows of cells, with each row comprising six cells. In this example, the cells 201 ₁₋ₙ are again of circular cylindrical form.

A cooling system 204 provides cooling to the rows of cells 201₁₋ₙ. The cooling system 204 comprises a plurality of heat exchanger plates 205₁₋₄, which are interleaved between adjacent rows 203₁₋₈ of the array 202. In the example shown in Figure 2, the heat exchanger plates 205₁₋₄ are interleaved between alternate pairs of rows of the array 202, i.e. between rows 203₁ and 203₂, between rows 203s and 203₄, between rows 203s and 203₆, and between rows 203₇ and 203₈. Each of the cells 201₁₋ₙ in the array 202 is thereby thermally connected to one of the heat exchanger plates 205₁₋₄ on one side. The heat exchanger plates 205₁₋₄ in this example are corrugated to provide a greater area of thermal contact with the cells 201₁₋ₙ of the array 202. This also allows for the cells 201₁₋ₙ to be more closely packed together. The corrugations in the heat exchanger plates 205₁₋₄ have a spacing equal to the spacing of the cells 201₁₋ₙ along each row 203₁₋₇.

A cooling fluid passes through the heat exchanger plates 205₁₋₄, entering at a first end of the heat exchanger plates 205₁₋₄ via an inlet 206 and inlet manifold 208 and exiting at an opposing end of the heat exchanger plates 205₁₋₄ via an outlet manifold 209 and outlet 207. The cooling fluid may then be recirculated after heat has been extracted.

A plurality of thermal barrier walls 210₁₋₅ are interleaved between adjacent rows 203₁₋₈ of the array 202. In the example shown in Figure 2, the thermal barrier walls 210₁₋₅ are interleaved between adjacent rows of the array, i.e. between rows 203₂ and 203s, between rows 203₄ and 203s, and between rows 203₆ and 203₇. The thermal barrier walls 210₁₋₅ are in this example interleaved between different alternate pairs of rows to the heat exchanger plates 205₁₋₄. The thermal barrier walls 210₁₋₅ are also corrugated, allowing for the cells 201₁₋ₙ to be more closely packed together.

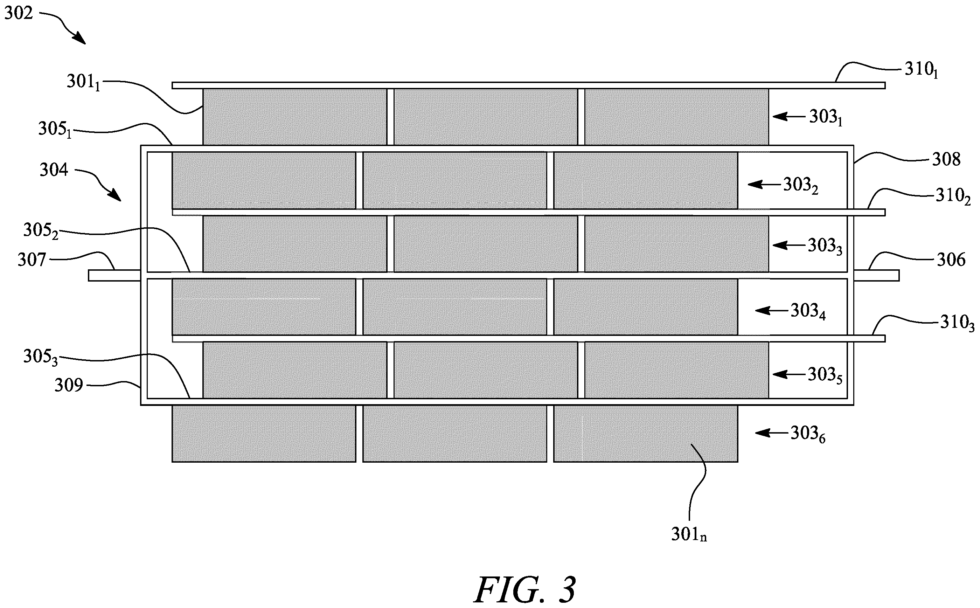

Figure 3 illustrates an alternative battery cell array 302 comprising a plurality of battery cells 303₁₋ₙ. The battery cells 303₁₋ₙ are arranged in a plurality of rows 303₁₋₆. The illustration shows in this case six rows 303₁₋₆ of cells, with each row comprising three cells. In this example, the cells 301₁₋ₙ are of prismatic, i.e. rectangular sectional, form.

A cooling system 304 provides cooling to the rows of cells 301₁₋ₙ. The cooling system 304 comprises a plurality of heat exchanger plates 305₁₋₃, which are interleaved between adjacent rows 303₁₋₆ of the array 302. In the example shown in Figure 3, the heat exchanger plates 305₁₋₃ are interleaved between alternate pairs of rows of the array 302, i.e. between rows 303₁ and 303₂, between rows 303s and 303₄, and between rows 303s and 303s. Each of the cells 301₁₋ₙ in the array 302 is thereby thermally connected to one of the heat exchanger plates 305₁₋₃ on one side. The heat exchanger plates 305₁₋₃ in this example are planar.

A cooling fluid passes through the heat exchanger plates 305₁₋₃, entering at a first end of the heat exchanger plates 305₁₋₃ via an inlet 306 and inlet manifold 308 and exiting at an opposing end of the heat exchanger plates 305₁₋₃ via an outlet manifold 309 and outlet 307. The cooling fluid may then be recirculated after heat has been extracted.

A plurality of thermal barrier walls 310₁₋₃ are interleaved between adjacent rows 303₁₋₆ of the array 202. In the example shown in Figure 3, the thermal barrier walls 310₁₋₃ are interleaved between adjacent rows of the array, i.e. between rows 303₂ and 303s, and between rows 303₄ and 303s. The thermal barrier walls 310₁₋₃ are in this example interleaved between different alternate pairs of rows to the heat exchanger plates 305₁₋₃. The thermal barrier walls 310₁₋₃ are also planar.

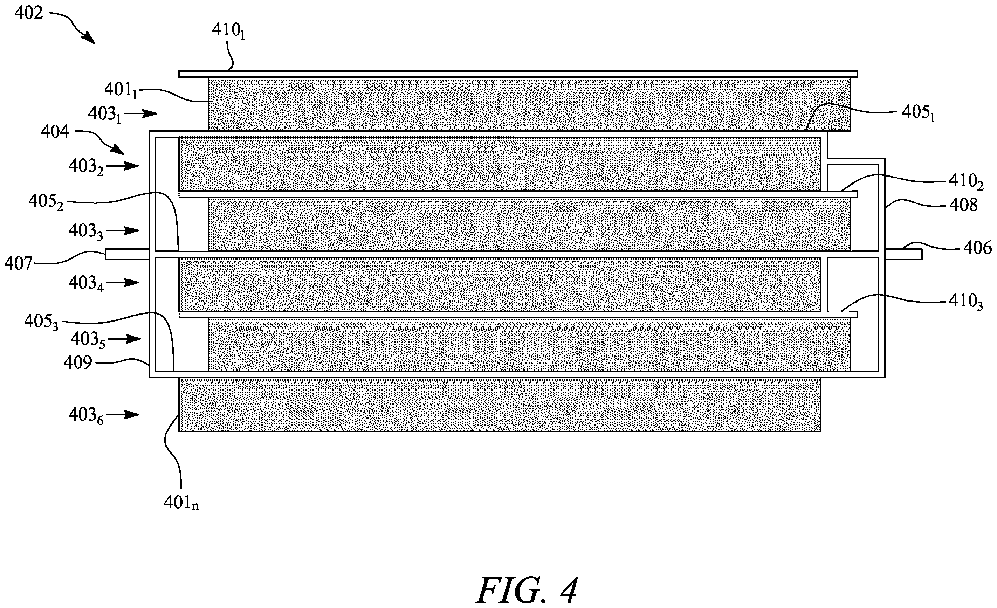

Figure 4 illustrates an alternative battery cell array 402 comprising a plurality of battery cells 403₁₋ₙ. The battery cells 403₁₋ₙ are arranged in a plurality of rows 403₁₋₆. The illustration shows in this case six rows 403₁₋₆ of cells, with each row comprising just one cell, although more than one cell may be provided in each row. In this example, the cells 401₁₋ₙ are larger format pouch cells, i.e. of generally rectangular sectional form. The cells 401₁₋ₙ may for example be of a lithium-ion or lithium-polymer type.

A cooling system 404 provides cooling to the rows of cells 401₁₋ₙ. The cooling system 404 comprises a plurality of heat exchanger plates 405₁₋₃, which are interleaved between adjacent rows 403₁₋₆ of the array 402. In the example shown in Figure 4, the heat exchanger plates 405₁₋₃ are interleaved between alternate pairs of rows of the array 402, i.e. between rows 403₁ and 403₂, between rows 403s and 403₄, and between rows 403s and 403s. Each of the cells 401₁₋ₙ in the array 402 is thereby thermally connected to one of the heat exchanger plates 405₁₋₃ on one side. The heat exchanger plates 405₁₋₃ in this example are planar.

A cooling fluid passes through the heat exchanger plates 405₁₋₃, entering at a first end of the heat exchanger plates 405₁₋₃ via an inlet 406 and inlet manifold 408 and exiting at an opposing end of the heat exchanger plates 405₁₋₃ via an outlet manifold 409 and outlet 407. The cooling fluid may then be recirculated after heat has been extracted.

A plurality of thermal barrier walls 410₁₋₃ are interleaved between adjacent rows 403₁₋₆ of the array 402. In the example shown in Figure 4, the thermal barrier walls 410₁₋₃ are interleaved between adjacent rows of the array, i.e. between rows 403₂ and 403s, and between rows 403₄ and 403s. The thermal barrier walls 410₁₋₃ are in this example interleaved between different alternate pairs of rows to the heat exchanger plates 405₁₋₃. The thermal barrier walls 410₁₋₃ are also planar.

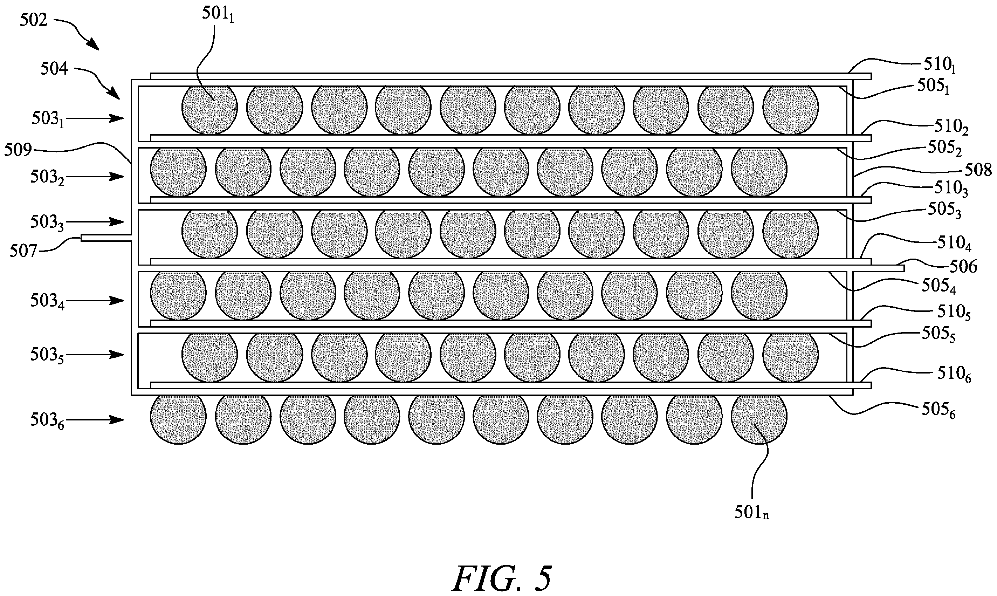

Figure 5 illustrates an example battery cell array 502 for a battery module. The array 502 comprises a plurality of battery cells 501₁₋ₙ. The battery cells 501₁₋ₙ are arranged in a plurality of rows 503₁₋₆. The illustration shows by example six rows 503₁₋₆ of cells, with each row comprising ten cells, in a similar arrangement to that shown in Figure 1. In this example, the cells 501₁₋ₙ are also of circular cylindrical form, although may alternatively be prismatic or pouch cells.

A cooling system 504 provides cooling to the rows of cells 501₁₋ₙ. The cooling system 504 comprises a plurality of heat exchanger plates 505₁₋₆, which are interleaved between adjacent rows of the array 502. In the example shown in Figure 5, the heat exchanger plates 505₁₋₆ are interleaved between each pair of rows 503₁₋₆ of the array 502, i.e. between rows 503₁ and 503₂, between rows 503₂ and 503s, between rows 503s and 503₄, between rows 503₄ and 503s, and between rows 503s and 503₆. Each of the cells 501₁₋ₙ in the array 502 is thereby thermally connected to one of the heat exchanger plates 505₁₋₆ on one side of the cell.

A cooling fluid passes through the heat exchanger plates 505₁₋₆, entering at a first end of the heat exchanger plates 505₁₋₆ via an inlet 506 and inlet manifold 508 and exiting at an opposing end of the heat exchanger plates 505₁₋₆ via an outlet manifold 509 and outlet 507. The cooling fluid may then be recirculated after heat has been extracted.

A plurality of thermal barrier walls 510₁₋₆ are interleaved between adjacent rows 503₁₋₆ of the array 502. In the example shown in Figure 5, the thermal barrier walls 510₁₋₆ are interleaved between each of the rows of the array, i.e. between the same rows as the heat exchanger plates 505₁₋₆. Each of the heat exchanger plates 505₁₋₆ in this example is mounted to a corresponding one of the thermal barrier walls 510₁₋₆.

As with the arrangement described above in relation to Figure 2, the thermal barrier walls 510₁₋₆ and heat exchanger plates 505₁₋₆ may alternatively be corrugated to improve thermal contact between the heat exchanger plates 505₁₋₆ and the cells 501₁₋ₙ and more closely pack the cells 501₁₋ₙ together.

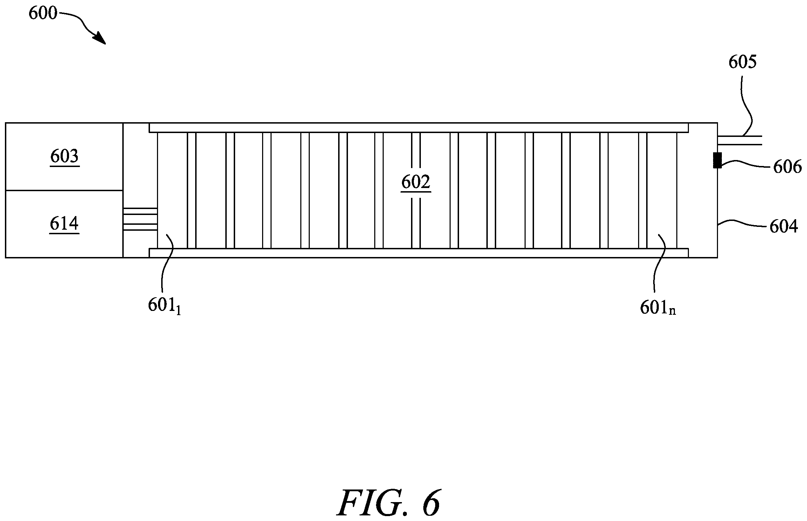

Figure 6 is a schematic diagram illustrating an example battery module 600. The battery module 600 comprises an enclosure 604 that surrounds and encloses a plurality of battery cells 601₁₋ₙ arranged in a battery cell array 602. The battery cell array 602 may be of any of the types of arrays described above in relation to Figures 1 to 5. The individual cells 601₁₋ₙ are electrically connected to, and monitored by, a battery management system 603. The battery management system 603 may be separate from the battery enclosure 604, for example in the form of a standalone unit or a unit that can be attached and removed from the battery enclosure 604 to support maintenance and service of the battery module 600. The battery management system 603 monitors the state of charge (SoC) of the battery cell array 602 and controls electrical power flows to and from the array 602. The battery management system 603 also performs other functions relating to monitoring the array 602 for safety and performance of the battery module 600.

A vent 605 is connected to the enclosure 604 and is arranged to provide a fluid flow path between an interior of the enclosure 604 and an external environment. A burst disc may be arranged to provide a fluid seal between the interior of the enclosure 604 and the vent 605, the burst disc being configured to rupture upon a pressure differential between the interior of the enclosure 604 and the external environment exceeding a predetermined threshold. The enclosure 604 may comprise multiple vents in some examples.

The enclosure 604 may further comprise a bleed valve 606 that is configured to allow for equalisation of pressure between the interior of the enclosure 604 and the external environment. The bleed valve 606 allows for the internal and external pressure to equalise over time by allowing for limited fluid flow, for example via a narrow orifice or porous element. The bleed valve 606 thereby functions to prevent a pressure differential building up due to changes in external atmospheric pressure or temperature variations within the enclosure 604. Such changes may occur over time periods extending between minutes to hours, while changes in pressure that can cause the disc to rupture may occur over shorter periods of time, for example from seconds to minutes.

The vent 605 may be arranged so that the interior of the enclosure 604 has, upon rupture of the disc, a fluid path to an exterior of a vehicle, for example an aircraft, in which the battery module 600 is installed, thereby directly gases resulting from failure of one or more of the battery cells in the array 602 to the external environment. The fluid path may include a manifold connecting multiple such enclosures to a common exhaust port. The manifold may comprise arrangements such as one-way valves to prevent back flow of exhaust gases affecting other enclosures.

The battery module further comprises a coolant system 614, which provides a flow of coolant fluid to and from the heat exchanger plates in the array 602. The coolant system 614 may be operated under control of the battery management system 603 for thermal management of the battery cells in the array 602.

The battery modules described herein are aimed at merging successful mitigation of thermal runaway propagation with the high efficiency cooling of cell side wall cooling. Through the combination of heat exchanger plates and thermal barrier walls, thermal runaway propagation is channelled into a single direction, resulting in energy release being generally limited to a small number of cells, for example between around two and four cells at once. The released heat may therefore be more easily contained. This gradual propagation allows the cooling system to reject the heat of a relatively small number of thermal runaways, and either stop thermal propagation altogether or significantly slow down the speed of propagation, leading to a more robust and safer battery design.

During normal operation the cooling system can be used to extract heat generated by the battery cells. Since the sidewalls of the cells have a large surface area, heat rejection expected to be efficient.

The designs described herein can be applied to battery modules with larger format cells including prismatic formats, which may be used in automotive applications, as well as large format pouch cells.

## Claims

1. A battery module (600) comprising:
a plurality of battery cells (101₁₋ₙ, 201₁₋ₙ, 301₁₋ₙ, 401₁₋ₙ, 501₁₋ₙ, 601₁₋ₙ) arranged in an array (102, 202, 303, 402, 502, 602);
a cooling system (104, 204, 304, 404, 505) comprising a plurality of heat exchanger plates (105₁₋₃, 205₁₋₄, 305₁₋₃, 405₁₋₃, 505₁₋₆) interleaved between rows (103₁₋₆, 203₁₋₈, 303₁₋₆, 403₁₋₆, 503₁₋₆) of the battery cell array (102, 202, 303, 402, 502, 602); and
a plurality of thermal barrier walls (110₁₋₃, 210₁₋₅, 310₁₋₃, 410₁₋₃, 510₁₋₆) interleaved between rows (103₁₋₆, 203₁₋₈, 303₁₋₆, 403₁₋₆, 503₁₋₆) of the battery cell array (102, 202, 303, 402, 502, 602).

2. The battery module (600) of claim 1, wherein the heat exchanger plates (105₁₋₃, 205₁₋₄, 305₁₋₃, 405₁₋₃) are interleaved between alternate pairs of rows (103₁₋₆, 203₁₋₈, 303₁₋₆, 403₁₋₆) of the battery cell array (102, 202, 303, 402, 602).

3. The battery module (600) of claim 1 or claim 2, wherein the heat exchanger plates (105₁₋₃, 205₁₋₄, 305₁₋₃, 405₁₋₃, 505₁₋₆) are corrugated.

4. The battery module (600) of any preceding claim, wherein the thermal barrier walls (110₁₋₃,210₁₋₅, 310₁₋₃, 410₁₋₃, 510₁₋₆) are interleaved between alternate pairs of rows (103₁₋₆, 203₁₋₈, 303₁₋₆, 403₁₋₆, 503₁₋₆) of the battery cell array (102, 202, 303, 402, 502, 602).

5. The battery module (600) of claim 4, wherein the thermal barrier walls (210₁₋₅) are corrugated.

6. The battery module (600) of any one of claims 2 to 5, wherein the thermal barrier walls (110₁₋₃, 210₁₋₅, 310₁₋₃, 410₁₋₃) are interleaved between different alternate pairs of rows (103₁₋₆, 203₁₋₈, 303₁₋₆, 403₁₋₆) to the heat exchanger plates (105₁₋₃, 205₁₋₄, 305₁₋₃, 405₁₋₃).

7. The battery module (600) of claim 1, wherein each of the heat exchanger plates (505₁₋₆) is mounted to a corresponding one of the thermal barrier walls (510₁₋₆).

8. The battery module (600) of claim 7, wherein the heat exchanger plates (505₁₋₆) and the thermal barrier walls (510₁₋₆) are interleaved between each pair of rows (503₁₋₆) of the array (502, 602).

9. The battery module (600) of any preceding claim, wherein the battery cells (101₁₋ₙ, 201₁₋ₙ, 501₁₋ₙ) are circular cylindrical cells.

10. The battery module (600) of any one of claims 1 to 8, wherein the battery cells (301₁₋ₙ) are prismatic cells.

11. The battery module (600) of any one of claims 1 to 8, wherein the battery cells (401₁₋ₙ) are pouch cells.

12. The battery module (600) of any preceding claim, wherein the battery cells (101₁₋ₙ, 201₁₋ₙ, 301₁₋ₙ, 401₁₋ₙ, 501₁₋ₙ) are lithium ion or lithium polymer battery cells.

13. The battery module (600) of any preceding claim, further comprising:
a battery management system (603) electrically connected to the battery cell array (602); and
an enclosure (604) surrounding the battery cell array (602),
wherein the battery management system is configured to control the cooling system (614) for thermal management of the battery cells (601 ₁₋ₙ) in the array (602).
